# EUROPÄISCHE PATENTSCHRIFT

(11) **EP 2 866 984 B1**
(45) Veröffentlichungstag und Bekanntmachung des Hinweises auf die Patenterteilung: **25.12.2019**
(21) Anmeldenummer: 13722460.6
(22) Anmeldetag: 15.05.2013
(51) Int. Cl.: B27B 17/02, B25F 5/02, E05B 63/18, E05C 3/04

(54) **WERKZEUGMASCHINE MIT EINER VERSCHLUSSVORRICHTUNG**
POWERTOOL WITH A CLOSURE DEVICE
OUTIL MOTORISÉ AVEC UN DISPOSITIF DE FERMETURE

(30) Priorität: 28.06.2012 DE 102012211098
(43) Veröffentlichungstag der Anmeldung: 06.05.2015
(73) Patentinhaber: Robert Bosch GmbH, 70442 Stuttgart (DE)
(72) Erfinder: ZIEGER, Jens, 73776 Altbach (DE); ENGELFRIED, Uwe, 73760 Ostfildern (DE); DUERR, Thomas, 71679 Asperg (DE)
(86) Internationale Anmeldenummer: PCT/EP2013/059986
(87) Internationale Veröffentlichungsnummer: WO 2014/000953

(56) Entgegenhaltungen:
- EP-A2- 2 309 190
- WO-A1-2007/103798
- WO-A1-2010/105809
- US-A- 3 797 870

## Beschreibung

### Stand der Technik

Es sind bereits Verschlussvorrichtungen bekannt, die ein beweglich gelagertes Verschlusselement und eine Fixiereinheit, die ein beweglich gelagertes Fixierelement zu einer Fixierung des Verschlusselements in zumindest einer Position des Verschlusselements aufweist, umfassen. Ein Werkzeugmaschine mit einer Werkzeugaufnahme mit einer Verschlussvorrichtung gemäß dem Oberbegriff des Anspruchs 1, ist aus WO2010/105809 bekannt.

### Offenbarung der Erfindung

Die Erfindung geht aus von einen Werkzeugmaschine mit zumindest einer Werkzeugaufnahme mit einer Verschlussvorrichtung gemäß Anspruch 1.

Es wird vorgeschlagen, dass die Verschlussvorrichtung zumindest eine Arretiereinheit aufweist, die zumindest ein Arretierelement umfasst, das das Fixierelement in Abhängigkeit von zumindest einer Position des Verschlusselements zumindest weitestgehend gegen eine Bewegung relativ zum Verschlusselement arretiert. Der Ausdruck "beweglich gelagert" soll hier insbesondere eine Lagerung einer Einheit und/oder eines Elements relativ zu zumindest einer weiteren Einheit und/oder relativ zu einem weiteren Element definieren, wobei die Einheit und/oder das Element, insbesondere entkoppelt von einer elastischen Verformung der Einheit und/oder des Elements und entkoppelt von bedingt durch ein Lagerspiel hervorgerufenen Bewegungsmöglichkeiten, eine Bewegungsmöglichkeit entlang zumindest einer Achse entlang einer Strecke größer als 1 mm, bevorzugt größer als 10 mm und besonders bevorzugt größer als 20 mm und/oder eine Bewegungsmöglichkeit um zumindest eine Achse um einen Winkel größer als 10°, bevorzugt größer als 45° und besonders bevorzugt größer als 60° aufweist.

Unter einem "Verschlusselement" soll hier insbesondere ein Element verstanden werden, das dazu vorgesehen ist, in zumindest einer Position, insbesondere in einer Verschlussposition, eine Haltekraft auf ein an dem Verschlusselement anliegendes weiteres Element auszuüben oder zwei relativ zueinander bewegliche Bauteile aneinander zu fixieren bzw. zu verschließen. Unter "vorgesehen" soll insbesondere speziell programmiert, ausgelegt und/oder ausgestattet verstanden werden. Das Verschlusselement ist als Werkzeughalteelement einer Werkzeugaufnahme ausgebildet. Die Werkzeugaufnahme ist bevorzugt dazu vorgesehen, eine Werkzeugaufnahme formschlüssig und/oder kraftschlüssig aufzunehmen bzw. eine Werkzeugmaschinentrennvorrichtung mittels einer formschlüssigen und/oder mittels einer kraftschlüssigen Verbindung mittels des Verschlusselements an einem Grundkörper der Werkzeugaufnahme zu fixieren. Das Verschlusselement übt zu einer Fixierung einer Werkzeugmaschinentrennvorrichtung am Grundkörper der Werkzeugaufnahme bevorzugt mittels einer Formschlussverbindung eine Haltekraft in Richtung des Grundkörpers auf eine Führungseinheit der Werkzeugmaschinentrennvorrichtung aus. Die Werkzeugmaschinentrennvorrichtung wird vorzugsweise zu einer Übertragung von Antriebskräften an die Werkzeugmaschinentrennvorrichtung von der Werkzeugaufnahme aufgenommen bzw. an dem Grundkörper der Werkzeugaufnahme fixiert. Hierbei übt das Verschlusselement zumindest in einer Fixierungsposition vorzugsweise eine Haltekraft auf die Werkzeugmaschinentrennvorrichtung aus, insbesondere in zumindest einem mit der Werkzeugaufnahme verbundenen Zustand der Werkzeugmaschinentrennvorrichtung. Zudem ist das Verschlusselement vorzugsweise schwenkbar um eine Bewegungsachse des Verschlusselements gelagert. Hierbei verläuft die Bewegungsachse des Verschlusselements bevorzugt zumindest im Wesentlichen parallel zu einer Spannfläche des Verschlusselements. Hierbei ist es denkbar, dass das Verschlusselement mit einer Federkraft eines Federelements der Verschlussvorrichtung in zumindest eine Position, insbesondere in eine Löseposition, des Verschlusselements beaufschlagt wird. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung von insbesondere kleiner als 8°, vorteilhaft kleiner als 5° und besonders vorteilhaft kleiner als 2° aufweist. Die Spannfläche des Verschlusselements ist vorzugsweise dazu vorgesehen, in der Fixierungsposition an einer in der Werkzeugaufnahme angeordneten Werkzeugmaschinentrennvorrichtung anzuliegen, insbesondere an einer Führungseinheit der Werkzeugmaschinentrennvorrichtung anzuliegen. Hierdurch wird mittels der Spannfläche des Verschlusselements in einer Fixierungsposition des Verschlusselements eine Haltekraft auf die Werkzeugmaschinentrennvorrichtung ausgeübt.

Der Begriff "Arretiereinheit" soll hier insbesondere eine Einheit definieren, die dazu vorgesehen ist, mittels einer formschlüssigen und/oder kraftschlüssigen Verbindung eine Bewegung eines Elements relativ zu einem weiteren Element zumindest weitestgehend zu verhindern, insbesondere eine Bewegung eines Elements relativ zu einem weiteren Element in zwei entgegengesetzt gerichtete Richtungen zumindest weitestgehend zu verhindern. Erfindungsgemäß ist die Arretiereinheit dazu vorgesehen, das Fixierelement zumindest in einer Löseposition des Verschlusselements relativ zum Verschlusselement gegen eine Bewegung zu fixieren. In der Löseposition des Verschlusselements kann vorzugsweise eine Entnahme oder ein Einlegen einer Werkzeugmaschinentrennvorrichtung in eine Aufnahmeausnehmung eines Grundkörpers der Werkzeugaufnahme erfolgen. Vorzugsweise gibt die Arretiereinheit bzw. das Arretierelement eine Bewegung des Fixierelements in einer Fixierungsposition des Verschlusselements frei. Somit ist das Fixierelement in einer Fixierungsposition des Verschlusselements relativ zum Verschlusselement beweglich. In einer Fixierungsposition des Verschlusselements ist das Fixierelement in eine Verriegelungsposition bewegbar. In einer Verriegelungsposition des Fixierelements wird das Verschlusselement zumindest mittels des Fixierelements am Grundkörper der Werkzeugaufnahme gegen eine Bewegung des Verschlusselements in eine Löseposition des Verschlusselements fixiert. Mittels der erfindungsgemäßen Ausgestaltung der Verschlussvorrichtung kann vorteilhaft eine komfortable Bedienbarkeit erreicht werden. Ferner kann vorteilhaft mittels des Arretierelements eine unbeabsichtigte Bewegung des Fixierelements in eine Verriegelungsposition des Fixierelements in einer Löseposition des Verschlusselements vermieden werden. Somit kann vorteilhaft eine Beeinträchtigung einer Bewegung des Verschlusselements ausgehend von einer Löseposition des Verschlusselements in eine Fixierungsposition des Verschlusselements infolge eines bereits in eine Verriegelungsposition bewegten Fixierelements vermieden werden.

Des Weiteren wird vorgeschlagen, dass das Arretierelement beweglich am Fixierelement angeordnet ist. Unter "beweglich angeordnet" soll hier insbesondere eine bewegliche Lagerung des Arretierelements am Fixierelement oder eine Anordnung des Arretierelements am Fixierelement verstanden werden, die eine Bewegung zumindest eines Teilbereichs des Arretierelements relativ zum Fixierelement ermöglicht, insbesondere durch eine elastische Verformung des Arretierelements. Somit kann konstruktiv einfach eine Überführung des Arretierelements aus einer Arretierposition in eine Freigabeposition erreicht werden.

Ferner wird vorgeschlagen, dass das Arretierelement einstückig mit dem Fixierelement ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es ist jedoch auch denkbar, dass das Arretierelement getrennt von dem Fixierelement ausgebildet ist und beweglich am Fixierelement gelagert ist. Mittels der erfindungsgemäßen Ausgestaltung der Verschlussvorrichtung kann vorteilhaft eine kompakte Arretiereinheit erreicht werden. Zudem können vorteilhaft Bauraum, Montageaufwand und Kosten eingespart werden.

Zudem ist das Arretierelement als federelastischer Fortsatz ausgebildet. Unter einem "federelastischen Fortsatz" soll hier insbesondere ein Element verstanden werden, das unter einer Einwirkung einer Kraft seine Ursprungsform und/oder seine ursprüngliche Ausrichtung relativ zu einem weiteren Element verändert und bei Wegfall der einwirkenden Kraft in die Ursprungsform zurückkehrt und/oder die ursprüngliche Ausrichtung relativ zum weiteren Element wieder einnimmt und somit eine einer Verformung entgegenwirkende Gegenkraft erzeugt. Es ist jedoch auch denkbar, dass das Arretierelement als starres Element ausgebildet ist, das mit einer Federkraft eines Federelements der Arretiereinheit beaufschlagt wird. Andere, einem Fachmann als sinnvoll erscheinende Ausgestaltungen sind ebenfalls denkbar. Mittels der erfindungsgemäßen Ausgestaltung kann vorteilhaft eine selbsttätige Rückstellung des Arretierelements in eine Arretierposition des Arretierelements erreicht werden. Somit kann vorteilhaft ein hoher Bedienkomfort erreicht werden.

Des Weiteren wird vorgeschlagen, dass die Arretiereinheit zumindest ein Anschlagelement umfasst, an dem das Arretierelement zu einer Arretierung des Fixierelements in zumindest einer Position des Arretierelements anliegt. Bevorzugt ist das Anschlagelement einstückig mit dem Verschlusselement ausgebildet. Es ist jedoch auch denkbar, dass das Anschlagelement getrennt von dem Verschlusselement ausgebildet ist und mittels zumindest eines, einem Fachmann als sinnvoll erscheinendes Befestigungselements am Verschlusselement befestig ist. Es kann konstruktiv einfach eine Arretierung des Fixierelements infolge einer formschlüssigen Verbindung zwischen dem Arretierelement und dem Anschlagelement erreicht werden. Zudem kann vorteilhaft eine kompakte Verschlussvorrichtung erreicht werden.

Ferner wird vorgeschlagen, dass die Arretiereinheit zumindest ein Löseelement umfasst, das das Arretierelement zu einer Bewegbarkeit des Fixierelements von einem Anschlagelement der Arretiereinheit weg bewegt. Bevorzugt ist das Löseelement dazu vorgesehen, das Arretierelement infolge einer Bewegung des Verschlusselements von einem Anschlagelement der Arretiereinheit wegzubewegen. Vorzugsweise ist das Löseelement einstückig mit dem Grundkörper der Werkzeugaufnahme ausgebildet. Es ist jedoch auch denkbar, dass das Löseelement beweglich am Verschlusselement oder beweglich am Fixierelement gelagert ist, wie beispielsweise als Schieber usw. Mittels der erfindungsgemäßen Ausgestaltung kann vorteilhaft eine Arretierung des Fixierelements aufgehoben werden, um eine Bewegung des Fixierelements relativ zum Verschlusselement zu ermöglichen.

Zudem wird vorgeschlagen, dass das Löseelement zumindest eine Schrägfläche aufweist, die infolge einer Bewegung des Verschlusselements eine Kraftkomponente in Richtung einer Freigabeposition des Arretierelements auf das Arretierelement ausübt. Das Arretierelement wird insbesondere infolge einer Bewegung, insbesondere einer Schwenkbewegung, des Verschlusselements in Kontakt mit der Schrägfläche des Löseelements gebracht. Es kann vorteilhaft eine Gleitreibung zu einer Überführung des Arretierelements in eine Freigabeposition des Arretierelements genutzt werden. Somit kann eine Auslenkung des Arretierelements vorteilhaft zu einer Bewegung des Arretierelements in eine Freigabeposition erreicht werden. Ferner kann vorteilhaft ein bewegungsabhängiges bzw. positionsabhängiges Freigeben des Arretierelements erreicht werden.

Des Weiteren wird vorgeschlagen, dass das Fixierelement schwenkbar am Verschlusselement gelagert ist. Hierbei verläuft eine Bewegungsachse des Fixierelements bevorzugt zumindest im Wesentlichen parallel zur Bewegungsachse des Verschlusselements. Es kann vorteilhaft ein Hebelgesetz zu einer Erzeugung einer Betätigungskraft genutzt werden. Zudem kann vorteilhaft ein Kniehebelprinzip zu einer Fixierung des Verschlusselements realisiert werden.

Vorzugsweise ist die Verschlussvorrichtung an einem Grundkörper der Werkzeugaufnahme angeordnet. Der Grundkörper ist bevorzugt drehbar an einem Werkzeugmaschinengehäuse einer Werkzeugmaschine gelagert. Hierdurch kann vorteilhaft eine sicher zu verschließende und eine komfortabel zu bedienende Werkzeugaufnahme realisiert werden.

Besonders bevorzugt ist die Werkzeugmaschine als tragbare Werkzeugmaschine ausgebildet. Die Werkzeugaufnahme ist bevorzugt zur formschlüssigen und/oder kraftschlüssigen Kopplung mit einer Werkzeugmaschinentrennvorrichtung vorgesehen. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Es kann vorteilhaft eine Werkzeugmaschine erreicht werden, an der besonders komfortabel eine Werkzeugmaschinentrennvorrichtung angeordnet werden kann.

Besonders bevorzugt bildet die Werkzeugmaschine und die Werkzeugmaschinentrennvorrichtung ein Werkzeugmaschinensystem. Die Werkzeugmaschinentrennvorrichtung umfasst bevorzugt zumindest einen Schneidstrang und zumindest eine Führungseinheit, die zusammen mit dem Schneidstrang ein geschlossenes System bildet. Somit ist die Werkzeugmaschinentrennvorrichtung selbst bevorzugt als geschlossenes System ausgebildet. Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Der Schneidstrang ist bevorzugt als Schneidkette ausgebildet. Es ist jedoch auch denkbar, dass der Schneidstrang eine andere, einem Fachmann als sinnvoll erscheinende Ausgestaltung aufweist, wie beispielsweise eine Ausgestaltung als Schneidschnur, an dem Schneidelemente fixiert sind.

Der Ausdruck "Führungseinheit" soll hier insbesondere eine Einheit definieren, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, insbesondere der Werkzeugaufnahme, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmitteln usw., voneinander trennbar sind.

Die Werkzeugmaschinentrennvorrichtung weist insbesondere, entlang einer zumindest im Wesentlichen senkrecht zu einer Schneidebene der Werkzeugmaschinentrennvorrichtung verlaufenden Richtung betrachtet, eine maximale Abmessung kleiner als 10 mm, bevorzugt kleiner als 8 mm und besonders bevorzugt kleiner als 5 mm auf. Vorzugsweise ist die Abmessung als Breite der Werkzeugmaschinentrennvorrichtung ausgebildet. Besonders bevorzugt weist die Werkzeugmaschinentrennvorrichtung, entlang der zumindest im Wesentlichen senkrecht zur Schneidebene der Werkzeugmaschinentrennvorrichtung verlaufenden Richtung betrachtet, entlang einer Gesamtlänge der Werkzeugmaschinentrennvorrichtung eine zumindest im Wesentlichen gleichbleibende maximale Abmessung auf. Somit ist die Werkzeugmaschinentrennvorrichtung vorzugsweise dazu vorgesehen, einen Schneidspalt zu erzeugen, der, entlang der zumindest im Wesentlichen senkrecht zur Schneidebene der Werkzeugmaschinentrennvorrichtung verlaufenden Richtung betrachtet, eine maximale Abmessung kleiner als 5 mm aufweist. Mittels des Werkzeugmaschinensystems kann besonders komfortabel eine Anpassung an unterschiedliche Einsatzgebiete erreicht werden, indem die Werkzeugmaschinentrennvorrichtung vorteilhaft von der Werkzeugaufnahme abnehmbar ist.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße tragbare Werkzeugmaschine mit einer erfindungsgemäßen Werkzeugaufnahme in einer schematischen Darstellung und
- Fig. 2: eine Detailansicht der erfindungsgemäßen Werkzeugaufnahme in einem von der erfindungsgemäßen tragbaren Werkzeugmaschine demontierten Zustand mit einer erfindungsgemäßen Verschlussvorrichtung in einer schematischen Darstellung,
- Fig. 3: eine weitere Detailansicht der erfindungsgemäßen Werkzeugaufnahme in einem von der erfindungsgemäßen tragbaren Werkzeugmaschine demontierten Zustand mit der erfindungsgemäßen Verschlussvorrichtung in einer schematischen Darstellung und
- Fig. 4: eine Detailansicht eines Fixierelements der erfindungsgemäßen Verschlussvorrichtung in einer schematischen Darstellung.

### Beschreibung des Ausführungsbeispiels

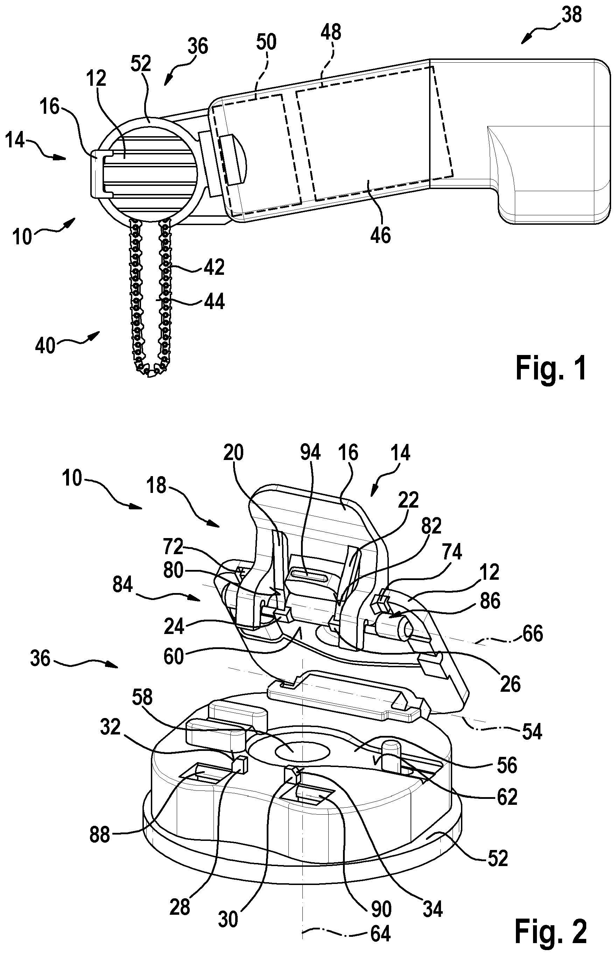

Figur 1 zeigt eine von einer tragbaren Werkzeugmaschine gebildete Werkzeugmaschine 38 mit einer Werkzeugaufnahme 36 zu einer formschlüssigen und/oder kraftschlüssigen Kopplung einer Werkzeugmaschinentrennvorrichtung 40. Die tragbare Werkzeugmaschine 38 und die Werkzeugmaschinentrennvorrichtung 40 bilden zusammen ein Werkzeugmaschinensystem. Die Werkzeugmaschinentrennvorrichtung 40 umfasst zumindest einen Schneidstrang 42 und zumindest eine Führungseinheit 44 zu einer Führung des Schneidstrangs 42. Die Führungseinheit 44 und der Schneidstrang 42 bilden zusammen ein geschlossenes System. Somit ist die Werkzeugmaschinentrennvorrichtung 40 als geschlossenes System ausgebildet. Ferner weist die Werkzeugmaschine 38 ein Werkzeugmaschinengehäuse 46 auf, das eine Antriebseinheit 48 und eine Getriebeeinheit 50 der Werkzeugmaschine 38 umschließt. Die Antriebseinheit 48 und die Getriebeeinheit 50 sind zur Erzeugung eines auf die Werkzeugmaschinentrennvorrichtung 40 übertragbaren Antriebsmoments auf eine, einem Fachmann bereits bekannte Art und Weise wirkungsmäßig miteinander verbunden. Die Getriebeeinheit 50 ist als Winkelgetriebe ausgebildet. Die Antriebseinheit 48 ist als Elektromotoreinheit ausgebildet. Es ist jedoch auch denkbar, dass die Antriebseinheit 48 und/oder die Getriebeeinheit 50 eine andere, einem Fachmann als sinnvoll erscheinende Ausgestaltung aufweisen, wie beispielsweise eine Ausgestaltung der Antriebseinheit 48 als Hybridantriebseinheit oder als Verbrennungsantriebseinheit usw. und/oder eine Ausgestaltung der Getriebeeinheit 50 als Schneckengetriebe usw. Die Antriebseinheit 48 ist dazu vorgesehen, den Schneidstrang 42 der Werkzeugmaschinentrennvorrichtung 40 in zumindest einem Betriebszustand über die Getriebeeinheit 50 anzutreiben. Hierbei wird der Schneidstrang 42 in der Führungseinheit 44 der Werkzeugmaschinentrennvorrichtung 40 entlang einer Schneidrichtung des Schneidstrangs 42 relativ zur Führungseinheit 44 bewegt. Der Schneidstrang 42 wird in einem Betrieb umlaufend um die Führungseinheit 44 bewegt.

Die Werkzeugaufnahme 36 ist zu einer Aufnahme der als geschlossenes System ausgebildeten Werkzeugmaschinentrennvorrichtung 40 vorgesehen. Hierbei umfasst die Werkzeugaufnahme 36 zumindest die Verschlussvorrichtung 10 und einen Grundkörper 52. Der Grundkörper 52 ist drehbar am Werkzeugmaschinengehäuse 46 der Werkzeugmaschine 38 gelagert. Der Grundkörper 52 ist drehbar um eine zumindest im Wesentlichen parallel zu einer Rotationsachse eines Antriebselements (hier nicht näher dargestellt) der Werkzeugaufnahme 36 und/oder der Werkzeugmaschine 38 verlaufende Drehachse 64 des Grundkörpers 52 am Werkzeugmaschinengehäuse 46 gelagert. Zu einer Fixierung einer Drehstellung des Grundkörpers 52 relativ zum Werkzeugmaschinengehäuse 46 weist die Werkzeugmaschine 38 zumindest eine Drehpositioniereinheit (hier nicht näher dargestellt) auf. Die Verschlussvorrichtung 10 ist am Grundkörper 52 der Werkzeugaufnahme 36 angeordnet. Somit ist die Verschlussvorrichtung 10 als Werkzeugaufnahmeverschlussvorrichtung ausgebildet. Zudem umfasst die Verschlussvorrichtung 10 zumindest ein beweglich gelagertes Verschlusselement 12 und zumindest eine Fixiereinheit 14, die zumindest ein beweglich gelagertes Fixierelement 16 zu einer Fixierung des Verschlusselements 12 in zumindest einer Position des Verschlusselements 12 aufweist. Das Verschlusselement 12 ist als Werkzeughalteelement ausgebildet. Hierbei ist das Verschlusselement 12 schwenkbar um eine zumindest im Wesentlichen parallel zu einer Spannfläche 60 des Verschlusselements 12 verlaufende Bewegungsachse 54 des Verschlusselements 12 am Grundkörper 52 gelagert.

Der Grundkörper 52 weist eine Aufnahmeausnehmung 56 zu einer zumindest teilweisen Aufnahme der Werkzeugmaschinentrennvorrichtung 40 in einem mit der Werkzeugaufnahme 36 gekoppelten Zustand der Werkzeugmaschinentrennvorrichtung 40 auf. Zu einer formschlüssigen und/oder kraftschlüssigen Fixierung der Werkzeugmaschinentrennvorrichtung 40 an der Werkzeugaufnahme 36 wirken die Aufnahmeausnehmung 56 des Grundkörpers 52 und die Spannfläche 60 des Verschlusselements 12 zusammen. Hierdurch wird in einem an der Werkzeugaufnahme 36 angeordneten Zustand der Werkzeugmaschinentrennvorrichtung 40 eine Haltekraft auf die Werkzeugmaschinentrennvorrichtung 40 ausgeübt. Zudem weist die Aufnahmeausnehmung 56 eine mit einem Teilbereich eines Umfangs der Werkzeugmaschinentrennvorrichtung 40 korrespondierende Form auf. Somit werden Kräfte und/oder Drehmomente, die in einer Schneidebene der Werkzeugmaschinentrennvorrichtung 40 mittels der Aufnahmeausnehmung 56 an der Werkzeugaufnahme 36 abgestützt.

Ferner weist der Grundkörper 52 eine Drehspielöffnung 58 auf, in der das Antriebselement (hier nicht näher dargestellt) der Werkzeugaufnahme 36 und/oder der Werkzeugmaschine 38 angeordnet ist. Das Antriebselement ist dazu vorgesehen, eine Antriebskraft der Antriebseinheit 48 an den Schneidstrang 42 zu übertragen. Somit greift das Antriebselement in einem mit der Werkzeugaufnahme 36 verbundenen Zustand der Werkzeugmaschinentrennvorrichtung 40 in den Schneidstrang 42 ein. Hierbei greift das Antriebselement in Antriebsausnehmungen von Schneidstrangsegmenten des Schneidstrangs 42 ein (hier nicht näher dargestellt).

Des Weiteren umfasst die Verschlussvorrichtung 10 zumindest eine Arretiereinheit 18, die zumindest ein Arretierelement 20 umfasst, das das Fixierelement 16 in Abhängigkeit von zumindest einer Position des Verschlusselements 12 zumindest weitestgehend gegen eine Bewegung relativ zum Verschlusselement 12 arretiert. Hierbei arretiert das Arretierelement 20 das Fixierelement 16 in einer Löseposition des Verschlusselements 12 zumindest weitestgehend gegen eine Bewegung relativ zum Verschlusselement 12. In einer Löseposition des Verschlusselements 12 ist das Verschlusselement 12 in eine vom Grundkörper 52 weg gerichtete Richtung geschwenkt relativ zum Grundkörper 52 angeordnet. Somit ist die Spannfläche 60 des Verschlusselements 12 in einer Löseposition des Verschlusselements 12 zumindest im Wesentlichen quer zu einer die Aufnahmeausnehmung 56 begrenzenden Anlagefläche 62 des Grundkörpers 52 ausgerichtet. Die Anlagefläche 62 des Grundkörpers 52 verläuft hierbei zumindest im Wesentlichen senkrecht zur Drehachse 64 des Grundkörpers 52. In einer Fixierungsposition des Verschlusselements 12, in der mittels des Verschlusselements 12 und der Anlagefläche 62 eine Haltekraft zu einer formschlüssigen und/oder kraftschlüssigen Fixierung der Werkzeugmaschinentrennvorrichtung 40 auf die Werkzeugmaschinentrennvorrichtung 40 ausübbar ist, ist die Spannfläche 60 des Verschlusselements 12 zumindest im Wesentlichen parallel zur Anlagefläche 62 ausgerichtet.

Das Arretierelement 20 ist zu einer Arretierung des Fixierelements 16 beweglich am Fixierelement 16 angeordnet. Hierbei ist das Arretierelement 20 einstückig mit dem Fixierelement 16 ausgebildet. Zu einer beweglichen Anordnung des Arretierelements 20 am Fixierelement 16 ist das Arretierelement 20 als federelastischer Fortsatz ausgebildet. Die Arretiereinheit 18 weist zudem ein weiteres Arretierelement 22 auf, das zu einer Arretierung des Fixierelements 16 beweglich am Fixierelement 16 angeordnet ist. Somit umfasst die Arretiereinheit 18 zumindest zwei Arretierelemente 20, 22, die das Fixierelement 16 in Abhängigkeit von zumindest einer Position des Verschlusselements 12 zumindest weitestgehend gegen eine Bewegung relativ zum Verschlusselement 12 arretieren. Es ist jedoch auch denkbar, dass die Arretiereinheit 18 eine von zwei abweichende Anzahl an Arretierelementen 20, 22 umfasst. Das weitere Arretierelement 22 ist ebenfalls einstückig mit dem Fixierelement 16 ausgebildet. Somit ist das weitere Arretierelement 22 zu einer beweglichen Anordnung des weiteren Arretierelements 22 am Fixierelement 16 ebenfalls als federelastischer Fortsatz ausgebildet. Das Arretierelement 20 und das weitere Arretierelement 22 weisen eine zumindest im Wesentlichen analoge Ausgestaltung auf. Hierbei sind das Arretierelement 20 und das weitere Arretierelement 22 spiegelsymmetrisch zu einer zumindest im Wesentlichen senkrecht zu einer Bewegungsachse 66 des Fixierelements 16 verlaufenden Ebene am Fixierelement 16 angeordnet. Es ist jedoch auch denkbar, dass das Arretierelement 20 und das weitere Arretierelement 22 eine andere, einem Fachmann als sinnvoll erscheinende Anordnung am Fixierelement 16 aufweisen, wie beispielsweise eine bezogen auf die Bewegungsachse 66 des Fixierelements 16 versetzte Anordnung usw. Das Fixierelement 16 ist hierbei schwenkbar am Verschlusselement 12 gelagert. Somit ist die Bewegungsachse 66 des Fixierelements 16 als Schwenkachse ausgebildet. Die Bewegungsachse 66 des Fixierelements 16 verläuft zumindest im Wesentlichen parallel zur Bewegungsachse 54 des Verschlusselements 12.

Des Weiteren umfasst die Arretiereinheit 18 zumindest ein Anschlagelement 24, an dem das Arretierelement 20 zu einer Arretierung des Fixierelements 16 in zumindest einer Position des Arretierelements 20 anliegt. Das Anschlagelement 24 ist in einem Bereich der Bewegungsachse 66 des Fixierelements 16 einstückig an das Verschlusselement 12 angeformt. Das Arretierelement 20 liegt hierbei zu einer Arretierung des Fixierelements 16 in Abhängigkeit von einer Position des Verschlusselements 12 mit einer Stirnfläche 68 am Anschlagelement 24 an. Die Arretiereinheit 18 umfasst ferner zumindest ein weiteres Anschlagelement 26, an dem das weitere Arretierelement 22 zu einer Arretierung des Fixierelements 16 in zumindest einer Position des weiteren Arretierelements 22 anliegt. Das weitere Anschlagelement 26 ist ebenfalls in einem Bereich der Bewegungsachse 66 des Fixierelements 16 einstückig an das Verschlusselement 12 angeformt. Das weitere Arretierelement 22 liegt hierbei zu einer Arretierung des Fixierelements 16 in Abhängigkeit von einer Position des Verschlusselements 12 mit einer Stirnfläche 70 am weiteren Anschlagelement 26 an. Somit umfasst die Arretiereinheit 18 zumindest zwei Anschlagelemente 24, 26, an denen das Arretierelemente 20 bzw. das weitere Arretierelement 22 zu einer Arretierung des Fixierelements 16 in zumindest einer Position des Arretierelements 20 bzw. des weiteren Arretierelements 22 anliegt. Es ist jedoch auch denkbar, dass die Arretiereinheit 18 eine von zwei abweichende Anzahl an Anschlagelementen 24, 26 umfasst.

Das Anschlagelement 24 und das weitere Anschlagelement 26 sind hinsichtlich einer zumindest im Wesentlichen senkrecht zur Bewegungsachse 66 des Fixierelements 16 verlaufenden Ebene spiegelsymmetrisch am Verschlusselement 12 angeordnet. Mittels eines Zusammenwirkens des Arretierelements 20 und des weiteren Arretierelements 22 mit dem Anschlagelement 24 und dem weiteren Anschlagelement 26 wird das Fixierelement 16 in Abhängigkeit von einer Position des Verschlusselements 12 gegen eine Bewegung in Richtung einer Verriegelungsposition des Fixierelements 16 zumindest weitestgehend verhindert.

Zudem umfasst das Fixierelement 16 zumindest einen Anschlagfortsatz 72 und einen weiteren Anschlagfortsatz 74 (Figuren 2 bis 4), die dazu vorgesehen sind, eine Bewegung des Fixierelements 16 in eine einer Bewegung in Richtung einer Verriegelungsposition des Fixierelements 16 entgegengesetzten Richtung relativ zum Verschlusselement 12 zu begrenzen. Hierbei wirken der Anschlagfortsatz 72 und der weitere Anschlagfortsatz 74 jeweils mit einer Anschlagfläche 76, 78 des Verschlusselements 12 zusammen.

Des Weiteren umfasst die Arretiereinheit 18 zumindest ein Löseelement 28, das das Arretierelement 20 zu einer Bewegbarkeit bzw. zu einer Bewegungsfreigabe des Fixierelements 16 von dem Anschlagelement 24 der Arretiereinheit 18 weg bewegt. Das Löseelement 28 ist dazu vorgesehen, in Abhängigkeit von einer Bewegung des Verschlusselements 12 relativ zum Grundkörper 52 zu einer Bewegbarkeit bzw. zu einer Bewegungsfreigabe des Fixierelements 16 das Arretierelement 20 von dem Anschlagelement 24 der Arretiereinheit 18 wegzubewegen. Hierbei ist das Löseelement 28 einstückig mit dem Grundkörper 52 ausgebildet. Die Arretiereinheit 18 weist ferner ein weiteres Löseelement 30 auf, das das weitere Arretierelement 22 zu einer Bewegbarkeit bzw. zu einer Bewegungsfreigabe des Fixierelements 16 von dem weiteren Anschlagelement 26 der Arretiereinheit 18 weg bewegt. Das weitere Löseelement 30 ist dazu vorgesehen, in Abhängigkeit von einer Bewegung des Verschlusselements 12 relativ zum Grundkörper 52 zu einer Bewegbarkeit bzw. zu einer Bewegungsfreigabe des Fixierelements 16 das weitere Arretierelement 22 von dem weiteren Anschlagelement 26 der Arretiereinheit 18 wegzubewegen. Hierbei ist das weitere Löseelement 30 ebenfalls einstückig mit dem Grundkörper 52 ausgebildet. Das Löseelement 28 und das weitere Löseelement 30 sind jeweils als Fortsatz an den Grundkörper 52 angeformt. Hierbei erstrecken sich das Löseelement 28 und das weitere Löseelement 30 zumindest im Wesentlichen senkrecht zur Anlagefläche 62 des Grundkörpers 52 in eine von dem Grundkörper 52 weggerichtete Richtung. Das Löseelement 28 und das weitere Löseelement 30 weisen jeweils zumindest eine Schrägfläche 32, 34 auf, die infolge einer Bewegung des Verschlusselements 12 eine Kraftkomponente in Richtung einer Freigabeposition des Arretierelements 20 bzw. des weiteren Arretierelements 22 auf das Arretierelement 20 bzw. auf das weitere Arretierelement 22 ausübt. Somit ist das Fixierelement 16 erst in eine Verriegelungsposition des Fixierelements 16 bewegbar sobald das Arretierelement 20 und das weitere Arretierelement 22 durch das Löseelement 28 und das weitere Löseelement 30 in eine Freigabeposition des Arretierelements 20 und des weitere Arretierelements 22 in Abhängigkeit von einer Bewegung des Verschlusselements 12 ausgehend von einer Löseposition des Verschlusselements 12 in eine Fixierungsposition des Verschlusselements 12 bewegt sind.

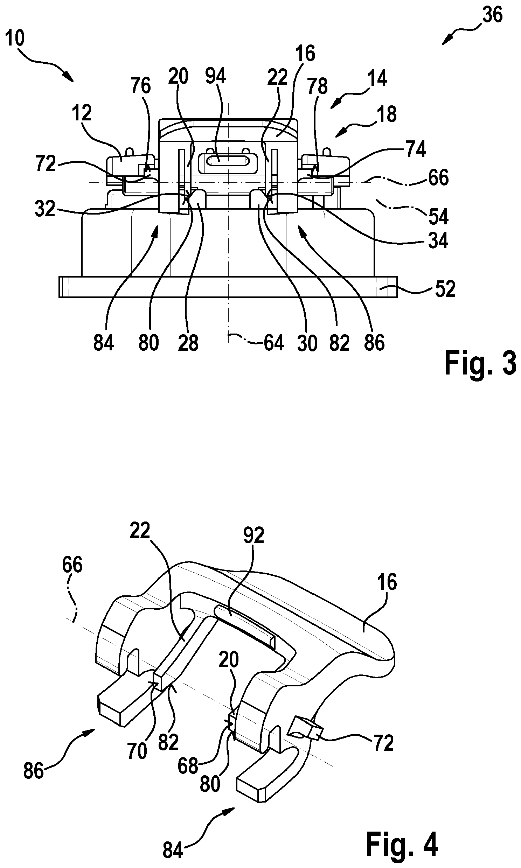

Zu einer Kopplung der Werkzeugmaschinentrennvorrichtung 40 mit der Werkzeugaufnahme 36 wird die Werkzeugmaschinentrennvorrichtung 40 in die Aufnahmeausnehmung 56 des Grundkörpers 52 eingelegt. Das Verschlusselement 12 befindet sich hierbei in einer Löseposition. Somit ist das Fixierelement 16 mittels der Arretiereinheit 18 zumindest weitestgehend gegen eine Bewegung relativ zum Verschlusselement 12 arretiert. Das Verschlusselement 12 wird nach einem Einlegen der Werkzeugmaschinentrennvorrichtung 40 von einem Bediener ausgehend von einer Löseposition des Verschlusselements 12 um die Bewegungsachse 54 des Verschlusselements 12 in eine Fixierungsposition des Verschlusselements 12 geschwenkt. In Abhängigkeit von der Schwenkbewegung des Verschlusselements 12 wird eine Lösefläche 80 des Arretierelements 20 auf die Schrägfläche 32 des Löseelements 28 zubewegt und eine Lösefläche 82 des weiteren Arretierelements 22 wird auf die Schrägfläche 34 des weiteren Löseelements 30 zubewegt. Infolge eines Kontakts zwischen der Lösefläche 80 des Arretierelements 20 und der Schrägfläche 32 des Löseelements 28 und eines Kontakts der Lösefläche 82 des weiteren Arretierelements 22 und der Schrägfläche 34 des weiteren Löseelements 30 wird jeweils eine Kraftkomponente in Richtung einer Freigabeposition des Arretierelements 20 und des weiteren Arretierelements 22 auf das Arretierelement 20 und das weitere Arretierelement 22 ausgeübt. Durch die weitere Bewegung des Verschlusselements 12 in eine Fixierungsposition des Verschlusselements 12 und des Kontakts der Löseflächen 80, 82 mit den Schrägflächen 32, 34 werden das Arretierelement 20 und das weitere Arretierelement 22 federelastisch in entgegengesetzte Richtungen jeweils in eine Freigabeposition bewegt. Somit werden das Arretierelement 20 und das weitere Arretierelement 22 mittels des Löseelements 28 und des weiteren Löseelements 30 relativ zueinander gespreizt (Figur 3). Nachdem das Arretierelement 20 und das weitere Arretierelement 22 jeweils in eine Freigabeposition bewegt sind, ist das Fixierelement 16 in Richtung einer Verriegelungsposition des Fixierelements 16 beweglich.

Infolge einer Schwenkbewegung des Fixierelements 16 um die Bewegungsachse 66 des Fixierelements 16 werden Rastbereiche 84, 86 des Fixierelements 16 mit Fixierbolzen 88, 90 der Fixiereinheit 14 formschlüssig und/oder kraftschlüssig verbunden. Es ist jedoch auch denkbar, dass die Rastbereiche 84, 86 infolge einer Schwenkbewegung des Fixierelements 16 um die Bewegungsachse 66 des Fixierelements 16 mit Teilbereichen eines einzigen Fixierbolzens formschlüssig und/oder kraftschlüssig verbunden werden. Die Rastbereiche 84, 86 sind, betrachtet in einer zumindest im Wesentlichen senkrecht zur Bewegungsachse 66 des Fixierelements 16 verlaufenden Ebene, kreisbogenförmig ausgebildet und begrenzen jeweils eine kreisbogenförmige Rastausnehmung. Die Fixierbolzen 88, 90 sind am Grundkörper 52 fixiert. Das Fixierelement 16 bildet zusammen mit den Fixierbolzen 88, 90 eine Kniehebelfixiereinheit, die auf eine, einem Fachmann bereits bekannte Art und Weise eine Haltekraft erzeugt. Somit ist die Fixiereinheit 14 dazu vorgesehen, das Verschlusselement 12 mittels einer formschlüssigen und/oder kraftschlüssigen Verbindung in einer Fixierungsposition des Verschlusselements 12 zu fixieren. Zu einer Sicherung des Fixierelements 16 in einer Verriegelungsposition des Fixierelements 16 weist das Fixierelement 16 zudem einen Sicherungsfortsatz 92 auf (Figur 4). Der Sicherungsfortsatz 92 wirkt in einer Verriegelungsposition des Fixierelements 16 mit einem Rastfortsatz 94 der Fixiereinheit 14 zusammen, der einstückig an das Verschlusselement 12 angeformt ist (Figur 3). Zudem sind in einem an der Werkzeugaufnahme 36 fixierten Zustand der Werkzeugmaschinentrennvorrichtung 40 Schneidstrangsegmente des Schneidstrangs 42 zu einem Antrieb des Schneidstrangs 42 in Eingriff mit dem Antriebselement.

Zu einem Lösen der Fixierung des Verschlusselements 12 in der Fixierungsposition des Verschlusselements 12 wird das Fixierelement 16 in Richtung des Verschlusselements 12 geschwenkt. Hierbei überrasten der Sicherungsfortsatz 92 und der Rastfortsatz 94 auf eine einem Fachmann bekannte Art und Weise um eine Bewegung des Fixierelements 16 zu ermöglichen. Infolge einer inneren Spannung im Arretierelement 20 und im weiteren Arretierelement 22 durch die Verformung in eine Freigabeposition des Arretierelements 20 und des weiteren Arretierelements 22 wird das Verschlusselement 12 nach einem Lösen der Fixierung gering um die Bewegungsachse 54 in Richtung einer Löseposition des Verschlusselements 12 bewegt. Das Arretierelement 20 und das weitere Arretierelement 22 bewegen sich somit infolge der Schwenkbewegung des Fixierelements 16 bis zu einem Anschlagen der Anschlagfortsätze 72, 74 an den Anschlagflächen 76, 78 und der inneren Spannung des Arretierelements 20 und des weiteren Arretierelements 22 selbsttätig in eine Arretierposition. Somit liegen das Arretierelement 20 und das weitere Arretierelement 22 wieder an dem Anschlagelement 24 und dem weiteren Anschlagelement 26 an und arretieren das Fixierelement 16 zumindest weitestgehend gegen eine Bewegung relativ zum Verschlusselement 12.

## Patentansprüche

1. Werkzeugmaschine mit zumindest einer Werkzeugaufnahme mit einer Verschlussvorrichtung, insbesondere Werkzeugaufnahmeverschlussvorrichtung, mit zumindest einem beweglich gelagerten Verschlusselement (12) und mit zumindest einer Fixiereinheit (14), die zumindest ein beweglich gelagertes Fixierelement (16) zu einer Fixierung des Verschlusselements (12) in zumindest einer Position des Verschlusselements (12) aufweist, mit zumindest einer Arretiereinheit (18), die zumindest ein Arretierelement (20, 22) umfasst, das das Fixierelement (16) in Abhängigkeit von zumindest einer Position des Verschlusselements (12) zumindest weitestgehend gegen eine Bewegung relativ zum Verschlusselement (12) arretiert, wobei das Verschlusselement (12) dazu vorgesehen ist, in zumindest einer Position, eine Haltekraft auf ein an dem Verschlusselement (12) anliegendes weiteres Element auszuüben oder zwei relativ zueinander bewegliche Bauteile aneinander zu fixieren, **dadurch gekennzeichnet, dass** die Arretiereinheit (18) dazu vorgesehen ist, das Fixierelement (16) zumindest in einer Löseposition des Verschlusselements (12) relativ zum Verschlusselement (12) gegen eine Bewegung zu fixieren, wobei das Arretierelement (20, 22) als federelastischer Fortsatz ausgebildet ist.

2. Werkzeugmaschine nach Anspruch 1, **dadurch gekennzeichnet, dass** das Arretierelement (20, 22) beweglich am Fixierelement (16) angeordnet ist.

3. Werkzeugmaschine nach einem der vorhergehenden Ansprüche, **dadurch gekennzeichnet, dass** das Arretierelement (20, 22) einstückig mit dem Fixierelement (16) ausgebildet ist.

4. Werkzeugmaschine nach einem der vorhergehenden Ansprüche, **dadurch gekennzeichnet, dass** die Arretiereinheit (18) zumindest ein Anschlagelement (24, 26) umfasst, an dem das Arretierelement (20, 22) zu einer Arretierung des Fixierelements (16) in zumindest einer Position des Arretierelements (20, 22) anliegt.

5. Werkzeugmaschine nach einem der vorhergehenden Ansprüche, **dadurch gekennzeichnet, dass** die Arretiereinheit (18) zumindest ein Löseelement (28, 30) umfasst, das das Arretierelement (20, 22) zu einer Bewegbarkeit des Fixierelements (16) von einem Anschlagelement (24, 26) der Arretiereinheit (18) weg bewegt.

6. Werkzeugmaschine nach Anspruch 5, **dadurch gekennzeichnet, dass** das Löseelement (28, 30) zumindest eine Schrägfläche (32, 34) aufweist, die infolge einer Bewegung des Verschlusselements (12) eine Kraftkomponente in Richtung einer Freigabeposition des Arretierelements (20, 22) auf das Arretierelement (20, 22) ausübt.

7. Werkzeugmaschine nach einem der vorhergehenden Ansprüche, **dadurch gekennzeichnet, dass** das Fixierelement (16) schwenkbar am Verschlusselement (12) gelagert ist.

## Claims

1. Machine tool having at least one tool holder having a closure device, in particular a tool holder closure device, having at least one movably mounted closure element (12) and having at least one fixing unit (14) which comprises at least one movably mounted fixing element (16) for fixing the closure element (12) in at least one position of the closure element (12), having at least one locking unit (18) which includes at least one locking element (20, 22) which locks the fixing element (16) at least extensively against a movement relative to the closure element (12) in dependence on at least one position of the closure element (12), wherein the closure element (12) is provided, in at least one position, for the purpose of exerting a holding force onto a further element that is abutting against the closure element (12) or fixing together two components that are movable relative to one another, **characterized in that** the locking unit (18) is provided for the purpose of fixing the fixing element (16), at least in a disengaging position of the closure element (12), against a movement relative to the closure element (12), wherein the locking element (20, 22) is realized as a resilient continuation.

2. Machine tool according to Claim 1, **characterized in that** the locking element (20, 22) is arranged on the fixing element (16) so as to be movable.

3. Machine tool according to either of the preceding claims, **characterized in that** the locking element (20, 22) is realized integrally with the fixing element (16).

4. Machine tool according to one of the preceding claims, **characterized in that** the locking element (18) includes at least one stop element (24, 26) against which the locking element (20, 22) abuts in at least one position of the locking element (20, 22) for locking the fixing element (16).

5. Machine tool according to one of the preceding claims, **characterized in that** the locking unit (18) includes at least one disengaging element (28, 30) which moves the locking element (20, 22) away from a stop element (24, 26) of the locking unit (18) for mobility of the fixing element (16).

6. Machine tool according to Claim 5, **characterized in that** the disengaging element (28, 30) comprises at least one inclined face (32, 34) which exerts a force component in the direction of a disengaging position of the locking element (20, 22) onto the locking element (20, 22) as a result of a movement of the closure element (12).

7. Machine tool according to one of the preceding claims, **characterized in that** the fixing element (16) is mounted on the closure element (12) so as to be pivotable.

## Revendications

1. Machine-outil avec au moins un logement d'outil avec un dispositif de fermeture, en particulier un dispositif de fermeture de logement d'outil, avec au moins un élément de fermeture (12) supporté de manière déplaçable et avec au moins une unité de fixation (14) qui présente au moins un élément de fixation (16) supporté de manière déplaçable en vue d'une fixation de l'élément de fermeture (12) dans au moins une position de l'élément de fermeture (12), avec au moins une unité de blocage (18) qui comprend au moins un élément de blocage (20, 22) qui bloque l'élément de fixation (16) en fonction d'au moins une position de l'élément de fermeture (12) au moins essentiellement pour l'empêcher de se déplacer par rapport à l'élément de fermeture (12), l'élément de fermeture (12) étant prévu, dans au moins une position, pour exercer une force de retenue sur un élément supplémentaire s'appliquant contre l'élément de fermeture (12) ou pour fixer l'un à l'autre deux composants déplaçables l'un par rapport à l'autre, **caractérisée en ce que** l'unité de blocage (18) est prévue pour fixer l'élément de fixation (16) au moins dans une position de desserrage de l'élément de fermeture (12) par rapport à l'élément de fermeture (12) pour l'empêcher de se déplacer, l'élément de blocage (20, 22) étant réalisé sous forme de saillie élastique à ressort:

2. Machine-outil selon la revendication 1, **caractérisée en ce que** l'élément de blocage (20, 22) est disposé de manière déplaçable sur l'élément de fixation (16).

3. Machine-outil selon l'une quelconque des revendications précédentes, **caractérisée en ce que** l'élément de blocage (20, 22) est réalisé d'une seule pièce avec l'élément de fixation (16).

4. Machine-outil selon l'une quelconque des revendications précédentes, **caractérisée en ce que** l'unité de blocage (18) comprend au moins un élément de butée (24, 26) contre lequel s'applique l'élément de blocage (20, 22) pour effectuer un blocage de l'élément de fixation (16) dans au moins une position de l'élément de blocage (20, 22) .

5. Machine-outil selon l'une quelconque des revendications précédentes, **caractérisée en ce que** l'unité de blocage (18) comprend au moins un élément de desserrage (28, 30) qui déplace l'élément de blocage (20, 22) à l'écart d'un élément de butée (24, 26) de l'unité de blocage (18) pour permettre un déplacement de l'élément de fixation (16).

6. Machine-outil selon la revendication 5, **caractérisée en ce que** l'élément de desserrage (28, 30) présente au moins une surface oblique (32, 34) qui, sous l'effet d'un déplacement de l'élément de fermeture (12), exerce sur l'élément de blocage (20, 22) une composante de force dans la direction d'une position de libération de l'élément de blocage (20, 22).

7. Machine-outil selon l'une quelconque des revendications précédentes, **caractérisée en ce que** l'élément de fixation (16) est supporté de manière pivotante sur l'élément de fermeture (12).
